# EUROPEAN PATENT SPECIFICATION

(11) **EP 4 039 511 B1**
(45) Date of publication and mention of the grant of the patent: **13.03.2024**
(21) Application number: 21000327.3
(22) Date of filing: 15.11.2021
(51) Int. Cl.: B60D 1/06, B60R 9/06, B60R 9/10

(54) **LOCKING SYSTEM ON THE BALL OF A TOW HOOK FOR MOTOR VEHICLES**
VERRIEGELUNGSSYSTEM AN DER KUGEL EINES ZUGHAKENS FÜR KRAFTFAHRZEUGE
SYSTÈME DE VERROUILLAGE SUR LA BOULE D'UN CROCHET DE REMORQUAGE POUR VÉHICULES À MOTEUR

(30) Priority: 09.02.2021 IT 202100002771
(43) Date of publication of application: 10.08.2022
(73) Proprietor: Aurilis Group Italia S.R.L., 12045 Fossano (CN) (IT)
(72) Inventor: Gemesio, Matteo, I-12045 FOSSANO (CN) (IT)
(74) Representative: Garavelli, Paolo

(56) References cited:
- EP-A1- 1 031 443
- EP-A1- 3 608 131
- DE-A1-102006 013 465
- DE-A1-102008 009 150
- DE-A1-102015 207 667
- IT-A1- UB20 153 100

## Description

The present invention refers to a closing system on the ball of a tow hook for motor vehicles. In particular, the invention refers to a system used to lock a device on the ball of a tow hook, for example a bicycle-carrier, a ski-carrier, a loading platform, or any device suitable for being installed on a tow hook mounted on the rear of a motor vehicle.

Closure systems on the ball of a tow hook for motor vehicles are known, in particular a ball with a diameter of about 50 mm made according to the ISO50 Standard, comprising two parts called "snails" which, through a movement of connecting rods and a closure of the toggle-type braces, attach to the ball.

This known closing system is operated by a user by means of a lever, and the closing force of the toggle on the snail nuts is adjusted by means of a screw, which adjusts the bottom dead center. DE 10 2006 013465 A1 also discloses such a closing system.

However, these known devices are not satisfactory and have the problem that, if the installation or adjustment of the locking system by the user is not carried out correctly, there is a risk that the device fixed to the tow hook will become disconnected because due to stresses, vibrations or jolts, the locking system could accidentally open and cause the device or the load transported along the road to be lost.

Object of the present invention is solving the aforementioned prior art problems by providing a closing system on the ball of a tow hook for motor vehicles, in particular that is self-locking, which prevents accidental opening and guarantees a safety closure under all installation and working conditions.

The aforementioned and other objects and advantages of the invention, which will emerge from the following description, are achieved with a closing system on the ball of a tow hook for motor vehicles such as the one described in the independent claims 1 and 2. Preferred embodiments and non-trivial variants of the present invention form the subject of the dependent claims.

It is understood that all attached claims form an integral part of the present description.

It will be immediately obvious that innumerable variations and modifications (for example relating to shape, dimensions, arrangements and parts with equivalent functionality) can be made to what is described, without departing from the scope of the invention as appears from the attached claims.

The present invention will be better described by some preferred embodiments, provided by way of non-limiting example, with reference to the attached drawings, in which:
- FIG. 1 shows a perspective view of a first embodiment of the closing system on the ball of a tow hook for motor vehicles according to the present invention in its closed position;
- FIG. 2 shows a side view of the closing system on the ball of a tow hook for motor vehicles of FIG. 1 in its open position;
- FIG. 3 shows a detailed side view of the closing system on the ball of a tow hook for motor vehicles of FIG. 1 in its open position;
- FIG. 4 shows a detailed side view of the closing system on the ball of a tow hook for motor vehicles of FIG. 1 in its closed position;
- FIG. 5 shows a side sectional view of the locking system on the ball of a tow hook for motor vehicles of FIG. 1 in its closed position;
- FIG. 6 shows a perspective view of a second embodiment of the closing system on the ball of a tow hook for motor vehicles according to the present invention in its closed position;
- FIG. 7 shows a perspective view of the locking system on the ball of a tow hook for motor vehicles of FIG. 6 in its open position;
- FIG. 8 shows another perspective view of the closing system on the ball of a tow hook for motor vehicles of FIG. 6 in its open position; and
- FIG. 9 shows another perspective view of the closing system on the ball of a tow hook for motor vehicles of FIG. 6 in its closed position.

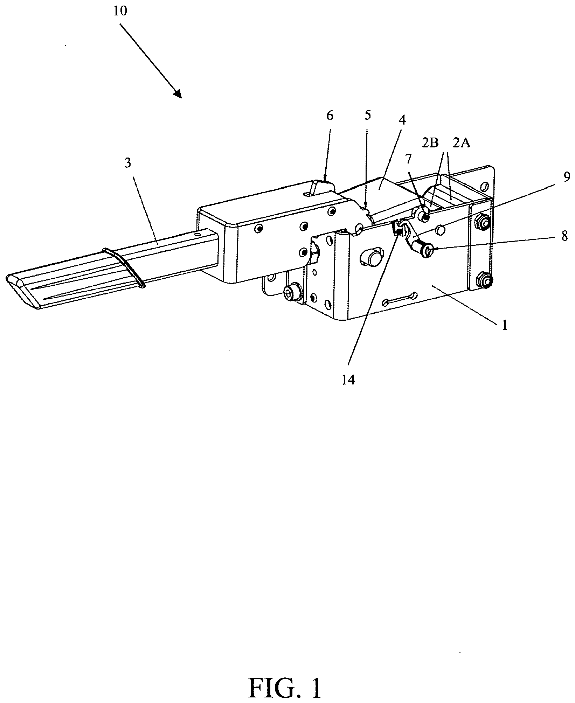

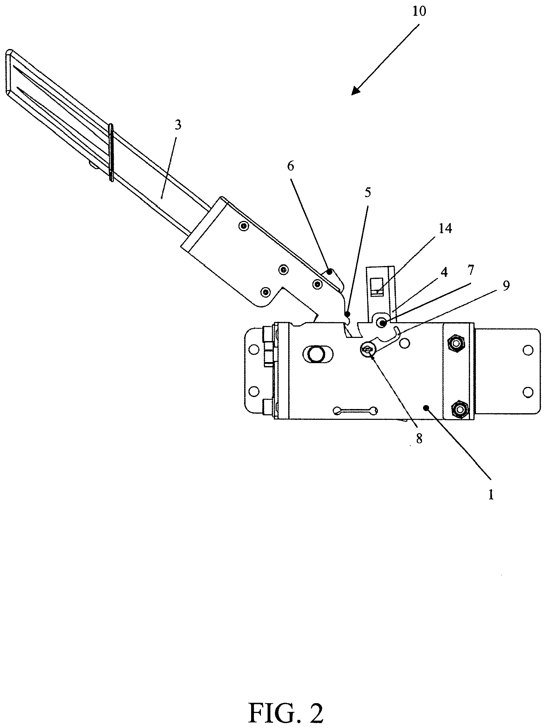

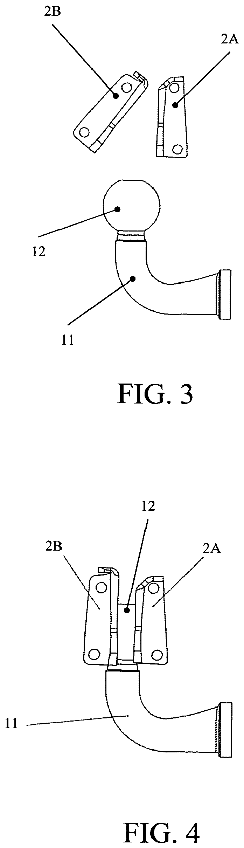

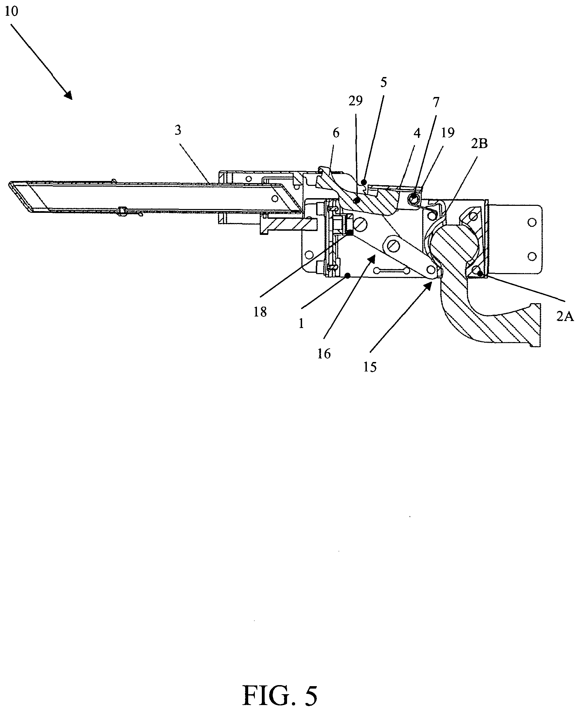

With reference to Figures 1 to 5, the closing system 10 on the ball 12 of a tow hook 11 for motor vehicles, according to a first embodiment of the invention, comprises a structure 1 comprising a first fixed snail nut 2A and a second mobile snail nut 2B, a movement system 15, 16 configured to operate the second movable snail nut 2B by locking or unlocking a ball 12 of the tow hook 11 between the two snail nuts 2A, 2B, said movement system 15 being operated by a lever 3, said closing system 10 further comprising locking means 4, 5 configured to stop the lever 3 when it is in a closed position, preferably in the lowered position, preventing it from lifting and unlocking the ball 12 by operating the movement system 15, 16 and the movable snail nut 2B.

The locking means comprise a locking element 4 rotatably connected around a pin 7 to the structure 1 which, in the event of an accidental opening of the system, interferes with a tooth 5 associated with the lever 3, for example obtained in the lever 3, to prevent the lever 3 from lifting and unlocking the mobile snail nut 2B.

The movement system comprises a toggle 15 operated by the lever 3 by means of a movement of connecting rods 16; the closing force of the toggle on the snail nuts 2A, 2B is adjusted, for example by means of a screw 18, which adjusts the bottom dead center.

Preferably, the closing system 10 of the invention further comprises an elastic element 19, for example a spring, which pushes the locking element 4 against the tooth 5, ensuring that the locking element 4 is always in the locking position, once lever 3 is closed.

The lever 3 also comprises a button 6, connected to the locking element 4, which is operated to lift the locking element 4 so as to release it from the tooth 5, allowing the lever 3 to be raised to release the ball 12 by opening the second mobile snail nut 2B, so as to install or uninstall the device on the ball 12 of the tow hook 11; preferably the button 6 can be rotated on a fulcrum 29 and includes an end resting on the blocking element 4 to lift it when the button 6 is pressed, releasing it from the tooth 5.

The locking system 10 of the invention comprises a lock 8 to which a hook 9 is fixed which, by rotating with the lock in the closed position, engages in a projection 14 of the locking element 4, consequently blocking the operation of the key 6 and the opening of the lever 3 thus preventing the theft of the product on the tow hook 11.

In the operation of the closing system 10 on the ball 12 of a tow hook 11 for motor vehicles according to the invention, the locking element 4 interferes with the tooth 5 preventing the lever 3 from lifting and unlocking the second mobile snail nut 2B. Once the lever 3 is closed, the spring pushes the locking element 4 towards the tooth 5, always ensuring the locking of the system, to ensure that the locking element 4 is always in the working position.

To install/uninstall the product from the tow hook 11, it is necessary to lift the lever 3 to position the second mobile snail nut 2B in the open position, by pressing the button 6 to release, lifting it upwards, the locking element 4 from the tooth 5.

Finally, the lock 8, when closed, blocks the operation of the button 6 and the opening of the lever 3.

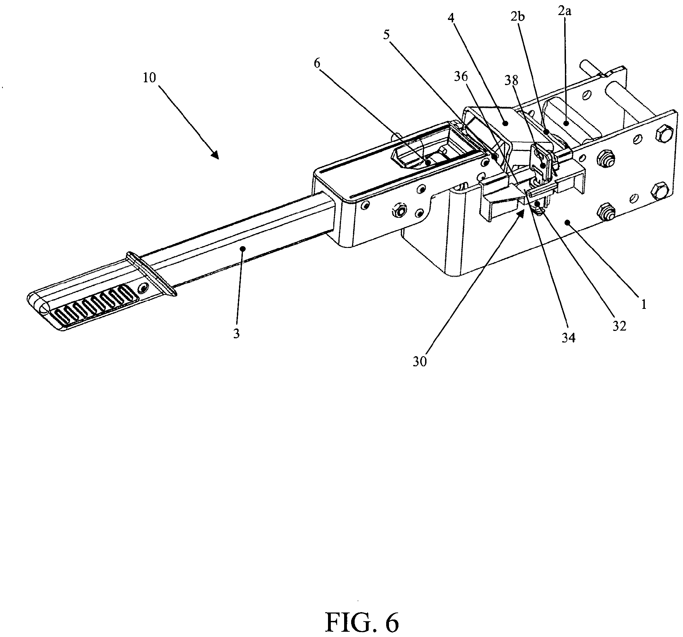

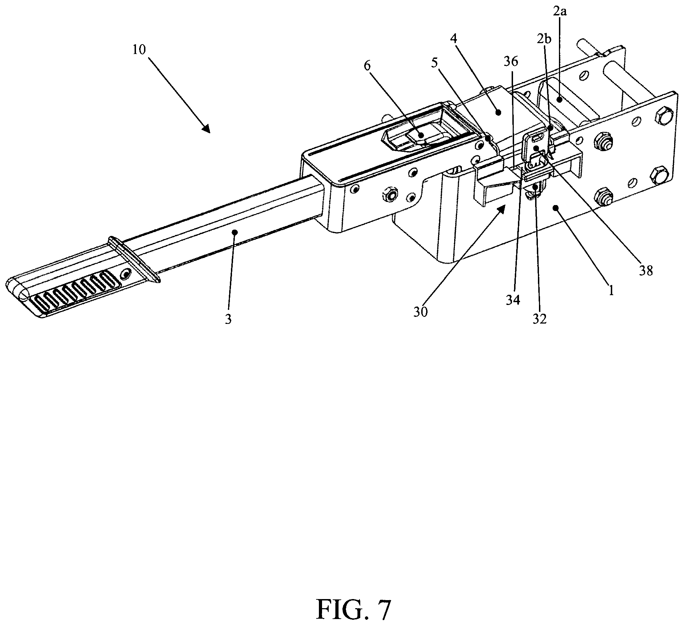

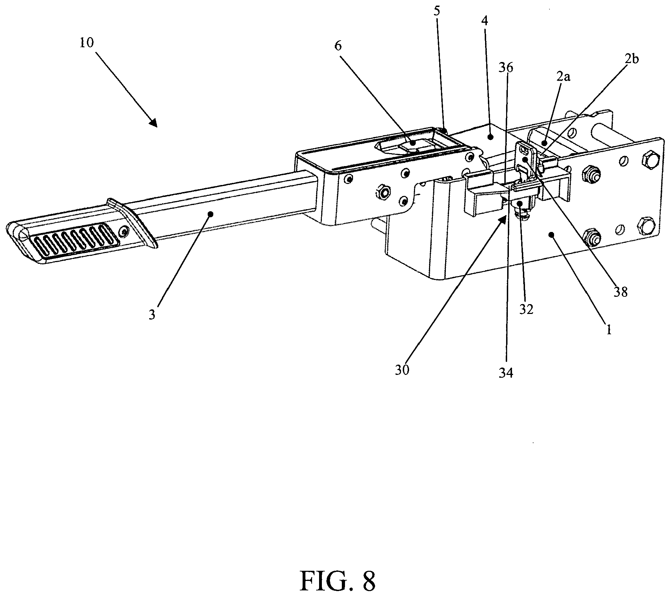

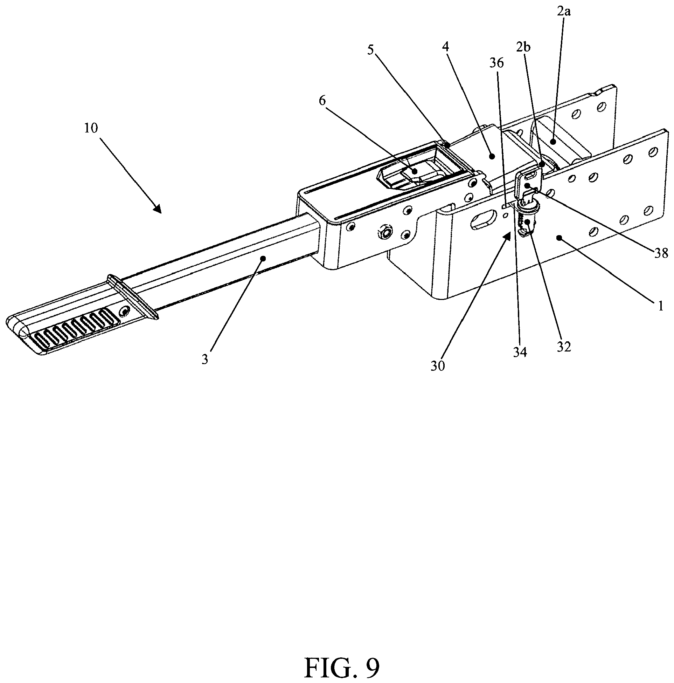

With reference to Figures 6 to 9, the closing system 10 on the ball 12 of a tow hook 11 for motor vehicles, according to a second embodiment of the invention, has a structure 1 similar to the one described above: the substantial difference with respect to the first embodiment is that the lock 8 of the first embodiment is replaced by a lock 30 consisting of a pawl 32 equipped with at least one protruding tongue 34 which, when the lock 30 is rotated into its closed position, engages in a slot 36 of the locking element 4, consequently blocking the operation of the button 6 and the opening of the lever 3.

The lock 30 may further comprise a key 38 designed to penetrate the pawl 32 and to move the pawl 32 between its open and closed positions.

Advantageously, the closing system 10 on the ball 12 of a tow hook 11 for motor vehicles according to the invention prevents accidental opening and guarantees a safety closure under all installation and working conditions.

## Claims

1. Closing system (10) on the ball (12) of a tow hook (11) for motor vehicles comprising a structure (1) comprising a first fixed snail nut (2A) and a second mobile snail nut (2B), a movement system (15, 16) configured for activate the second mobile snail nut (2B) by locking or unlocking a ball (12) of the tow hook (11) between the two snail nuts (2A, 2B), said movement system (15) being operated by a lever (3) and said closing system (10) comprising locking means (4, 5) configured to stop the lever (3) when it is in a closed position, preventing it from lifting and unlocking the ball (12) by operating the movement system (15, 16) and the mobile snail nut (2B), the locking means comprising a locking element (4) connected to the structure (1) which, in case of accidental opening of the system, interferes with a tooth (5) associated with the lever (3) to prevent the lever (3) from lifting and unlocking the movable snail nut (2B), the lever (3) comprising a button (6) connected to the locking element (4), which is operated to lift the locking element (4) so as to release it from the tooth (5), allowing to lift the lever (3) to release the ball (12) by opening the second mobile snail nut (2B), in order to install or uninstall the device on the ball (11) of the tow hook (12),
**characterized in that** it comprises a lock (8) to which a hook (9) is fixed which, by rotating with the lock in the closed position, engages in a projection (14) of the locking element (4), consequently blocking the operation of the button (6) and the opening of the lever (3).

2. Closing system (10) on the ball (12) of a tow hook (11) for motor vehicles comprising a structure (1) comprising a first fixed snail nut (2A) and a second mobile snail nut (2B), a movement system (15, 16) configured for activate the second mobile snail nut (2B) by locking or unlocking a ball (12) of the tow hook (11) between the two snail nuts (2A, 2B), said movement system (15) being operated by a lever (3) and said closing system (10) comprising locking means (4, 5) configured to stop the lever (3) when in a closed position, preventing it from lifting and unlocking the ball (12) by activating the movement system (15, 16) and the movable snail nut (2B), the locking means comprising a locking element (4) connected to the structure (1) which, in case of accidental opening of the system, interferes with a tooth (5) associated with the lever (3) to prevent the lever (3) from lifting and unlocking the mobile snail nut (2B), the lever (3) including a button (6) connected to the locking element (4), which is operated to lift the locking element (4) in order to release it from the tooth (5), allowing the lever (3) to be raised to release the ball (12) by opening the second mobile snail nut (2B), in order to install or uninstall the device on the ball (11) of the tow hook (12),
**characterized in that** it comprises a lock (30) consisting of a pawl (32) equipped with at least one protruding tongue (34) which, when the lock is rotated to its closed position, engages in a slot (36) of the locking element (4), consequently blocking the operation of the button (6) and the opening of the lever (3).

3. Closing system (10) on the ball (12) of a tow hook (11) for motor vehicles according to claim 2, **characterized in that** said lock (30) further comprises a key (38) designed to penetrate said pawl (32) and to move said pawl (32) between its open and closed positions.

4. Closing system (10) on the ball (12) of a tow hook (11) for motor vehicles according to claim 1, 2 or 3, **characterized in that** the locking element (4) is connected to the structure (1) in a rotatable way around a pin (7).

5. Closing system (10) on the ball (12) of a tow hook (11) for motor vehicles according to any one of the preceding claims, **characterized in that** it comprises an elastic element (19) which pushes the locking element (4) against the tooth (5), ensuring that the locking element (4) is always in its locking position, once the lever (3) is closed.

6. Closing system (10) on the ball (12) of a tow hook (11) for motor vehicles according to any of the preceding claims, **characterized in that** the button (6) can be rotated on a fulcrum (29) and comprises an end resting on the locking element (4) to lift it when the key (6) is pressed releasing it from the tooth (5).

7. Closing system (10) on the ball (12) of a tow hook (11) for motor vehicles according to any one of the preceding claims, **characterized in that** the movement system comprises a toggle (15) operated by the lever (3) through a movement of connecting rods (16) .

8. Closing system (10) on the ball (12) of a tow hook (11) for motor vehicles according to claim 7, **characterized in that** the closing force of the toggle on the snail nuts (2A, 2B) is adjusted by means of a screw (18).

## Patentansprüche

1. Schließsystem (10) an der Kugel (12) eines Anhängerkupplungshakens (11) für Kraftfahrzeuge, umfassend eine Struktur (1), die eine erste feste Mutter (2A) und eine zweite bewegliche Mutter (2B) umfasst, ein Bewegungssystem (15, 16), die so konfiguriert sind, dass sie die zweite bewegliche Mutter (2B) durch Blockieren oder Entriegeln einer Kugel (12) des Zughakens (11) zwischen den beiden Muttern (2A, 2B) betätigen, wobei das Bewegungssystem (15) betätigt wird durch a Hebel (3) und wobei das Schließsystem (10) Verriegelungsmittel (4, 5) umfasst, die so konfiguriert sind, dass sie den Hebel (3) anhalten, wenn er sich in einer geschlossenen Position befindet, wodurch er daran gehindert wird, die Kugel (12) anzuheben und zu entriegeln, indem die Bewegung aktiviert wird System (15, 16) und der beweglichen Spirale (2B), wobei die Verriegelungsmittel ein mit der Struktur (1) verbundenes Verriegelungselement (4) umfassen, das im Falle eines versehentlichen Öffnens des Systems mit einem Zahn (5) in Eingriff kommt, mit dem Hebel (3) verbunden, um zu verhindern, dass der Hebel (3) die bewegliche Spirale (2B) anhebt und entriegelt, wobei der Hebel (3) einen mit dem Verriegelungselement (4) verbundenen Knopf (6) aufweist, der zum Anheben aktiviert wird Lösen Sie das Verriegelungselement (4) vom Zahn (5) und heben Sie den Hebel (3) an, um die Kugel (12) zu entriegeln, indem Sie die zweite bewegliche Spirale (2B) öffnen und installieren oder das Gerät an der Kugel (11) des Abschlepphakens (12) demontieren,
**dadurch gekennzeichnet, dass** es ein Schloss (8) umfasst, an dem ein Haken (9) befestigt ist, der durch Drehen bei geschlossenem Schloss in einen Vorsprung (14) des Verriegelungselements (4) eingreift und somit den Betrieb blockiert des Knopfes (6) und das Öffnen des Hebels (3).

2. Schließsystem (10) an der Kugel (12) eines Anhängerkupplungshakens (11) für Kraftfahrzeuge, umfassend eine Struktur (1), die eine erste feste Mutter (2A) und eine zweite bewegliche Mutter (2B) umfasst, ein Bewegungssystem (15, 16), die so konfiguriert sind, dass sie die zweite bewegliche Mutter (2B) durch Blockieren oder Entriegeln einer Kugel (12) des Zughakens (11) zwischen den beiden Muttern (2A, 2B) betätigen, wobei das Bewegungssystem (15) betätigt wird durch a Hebel (3) und wobei das Schließsystem (10) Verriegelungsmittel (4, 5) umfasst, die so konfiguriert sind, dass sie den Hebel (3) anhalten, wenn er sich in einer geschlossenen Position befindet, wodurch er daran gehindert wird, die Kugel (12) anzuheben und zu entriegeln, indem die Bewegung aktiviert wird System (15, 16) und der beweglichen Spirale (2B), wobei die Verriegelungsmittel ein mit der Struktur (1) verbundenes Verriegelungselement (4) umfassen, das im Falle eines versehentlichen Öffnens des Systems mit einem Zahn (5) in Eingriff kommt, mit dem Hebel (3) verbunden, um zu verhindern, dass der Hebel (3) die bewegliche Spirale (2B) anhebt und entriegelt, wobei der Hebel (3) einen mit dem Verriegelungselement (4) verbundenen Knopf (6) aufweist, der zum Anheben aktiviert wird Lösen Sie das Verriegelungselement (4) vom Zahn (5) und heben Sie den Hebel (3) an, um die Kugel (12) zu entriegeln, indem Sie die zweite bewegliche Spirale (2B) öffnen und installieren oder das Gerät an der Kugel (11) des Abschlepphakens (12) demontieren,
**dadurch gekennzeichnet, dass** es ein Schloss (30) umfasst, das aus einer Sperrklinke (32) besteht, die mit mindestens einer vorstehenden Zunge (34) ausgestattet ist, die beim Drehen des Schlosses in die Schließstellung in eine Nut (36) des Verriegelungselements eingreift (4) und blockiert somit die Betätigung des Knopfes (6) und das Öffnen des Hebels (3).

3. Schließsystem (10) an der Kugel (12) einer Anhängerkupplung (11) für Kraftfahrzeuge nach Anspruch 2, **dadurch gekennzeichnet, dass** das Schloss (30) außerdem einen Schlüssel (38) umfasst, der dazu bestimmt ist, in die Sperrklinke (32) einzudringen und bewegen Sie die Sperrklinke (32) zwischen der offenen und der geschlossenen Position.

4. Schließsystem (10) an der Kugel (12) eines Anhängerkupplungshakens (11) für Kraftfahrzeuge nach Anspruch 1, 2 oder 3, **dadurch gekennzeichnet, dass** das Verriegelungselement (4) mit der Struktur (1) verbunden ist um einen Stift (7) drehbar.

5. Schließsystem (10) an der Kugel (12) einer Anhängerkupplung (11) für Kraftfahrzeuge nach einem der vorhergehenden Ansprüche, **dadurch gekennzeichnet, dass** es ein elastisches Element (19) umfasst, das das Verriegelungselement (4) drückt, gegen den Zahn (5) und stellt so sicher, dass sich das Verriegelungselement (4) immer in der verriegelten Position befindet, sobald der Hebel (3) geschlossen ist.

6. Schließsystem (10) an der Kugel (12) einer Anhängerkupplung (11) für Kraftfahrzeuge nach einem der vorhergehenden Ansprüche, **dadurch gekennzeichnet, dass** der Knopf (6) an einem Drehpunkt (29) drehbar ist und schließt ein Ende ruht auf dem Verriegelungselement (4), um es beim Drücken des Knopfes (6) anzuheben und vom Zahn (5) zu lösen.

7. Schließsystem (10) an der Kugel (12) einer Anhängerkupplung (11) für Kraftfahrzeuge nach einem der vorhergehenden Ansprüche, **dadurch gekennzeichnet, dass** das Bewegungssystem einen durch den Hebel (3) betätigten Kniehebel (15) umfasst, über eine Bewegung von Pleueln (16).

8. Schließsystem (10) an der Kugel (12) eines Anhängerkupplungshakens (11) für Kraftfahrzeuge nach Anspruch 7, **dadurch gekennzeichnet, dass** die Schließkraft des Knebels an den Muttern (2A, 2B) mittels reguliert wird eine Schraube (18).

## Revendications

1. Système de fermeture (10) sur la rotule (12) d'un crochet de remorquage (11) pour véhicules automobiles comprenant une structure (1) comprenant un premier écrou fixe (2A) et un deuxième écrou mobile (2B), un système de déplacement ( 15, 16) configuré pour actionner le deuxième écrou mobile (2B) en bloquant ou déverrouillant une boule (12) du crochet de remorquage (11) entre les deux écrous (2A, 2B), ledit système de déplacement (15) étant actionné par un levier (3) et ledit système de fermeture (10) comprenant des moyens de verrouillage (4, 5) configurés pour arrêter le levier (3) lorsqu'il est dans une position fermée, l'empêchant de soulever et déverrouiller la boule (12) en activant le mouvement système (15, 16) et la volute mobile (2B), les moyens de verrouillage comprenant un élément de verrouillage (4) lié à la structure (1) qui, en cas d'ouverture accidentelle du système, interfère avec une dent (5) associé au levier (3) pour empêcher le levier (3) de soulever et de déverrouiller la volute mobile (2B), le levier (3) comprenant un bouton (6) relié à l'élément de verrouillage (4), qui est activé pour soulever l'élément de verrouillage (4) de manière à le dégager de la dent (5), permettant de soulever le levier (3) pour déverrouiller la boule (12) en ouvrant la deuxième volute mobile (2B), de manière à installer soit désinstaller le dispositif sur la rotule (11) du crochet de remorquage (12),
**caractérisé en ce qu'**il comprend un verrou (8) auquel est fixé un crochet (9) qui, en tournant avec le verrou en position fermée, s'engage dans une saillie (14) de l'élément de verrouillage (4), bloquant ainsi le fonctionnement du bouton (6) et l'ouverture du levier (3).

2. Système de fermeture (10) sur la rotule (12) d'un crochet de remorquage (11) pour véhicules automobiles comprenant une structure (1) comprenant un premier écrou fixe (2A) et un deuxième écrou mobile (2B), un système de déplacement ( 15, 16) configuré pour actionner le deuxième écrou mobile (2B) en bloquant ou déverrouillant une boule (12) du crochet de remorquage (11) entre les deux écrous (2A, 2B), ledit système de déplacement (15) étant actionné par un levier (3) et ledit système de fermeture (10) comprenant des moyens de verrouillage (4, 5) configurés pour arrêter le levier (3) lorsqu'il est dans une position fermée, l'empêchant de soulever et déverrouiller la boule (12) en activant le mouvement système (15, 16) et la volute mobile (2B), les moyens de verrouillage comprenant un élément de verrouillage (4) lié à la structure (1) qui, en cas d'ouverture accidentelle du système, interfère avec une dent (5) associé au levier (3) pour empêcher le levier (3) de soulever et de déverrouiller la volute mobile (2B), le levier (3) comprenant un bouton (6) relié à l'élément de verrouillage (4), qui est activé pour soulever l'élément de verrouillage (4) de manière à le dégager de la dent (5), permettant de soulever le levier (3) pour déverrouiller la boule (12) en ouvrant la deuxième volute mobile (2B), de manière à installer soit désinstaller le dispositif sur la rotule (11) du crochet de remorquage (12),
**caractérisé en ce qu'**il comprend un verrou (30) qui est constitué d'un cliquet (32) équipé d'au moins une languette saillante (34) qui, lorsque le verrou est tourné vers la position fermée, s'engage dans une rainure (36) de l'élément de verrouillage (4), bloquant par conséquent le fonctionnement du bouton (6) et l'ouverture du levier (3).

3. Système de verrouillage (10) sur la rotule (12) d'un crochet de remorquage (11) pour véhicules automobiles selon la revendication 2, **caractérisé en ce que** ladite serrure (30) comprend également une clé (38) destinée à pénétrer dans ledit cliquet (32) et déplacer ledit cliquet (32) entre les positions ouverte et fermée.

4. Système de fermeture (10) sur la boule (12) d'un crochet de remorquage (11) pour véhicules automobiles selon la revendication 1, 2 ou 3, **caractérisé par le fait que** l'élément de verrouillage (4) est lié à la structure (1) rotatif autour d'un axe (7).

5. Système de fermeture (10) sur la rotule (12) d'un crochet de remorquage (11) pour véhicules automobiles selon l'une quelconque des revendications précédentes, **caractérisé en ce qu'**il comprend un élément élastique (19) qui pousse l'élément de verrouillage (4) contre la dent (5), garantissant que l'élément de verrouillage (4) soit toujours en position verrouillée, une fois le levier (3) fermé.

6. Système de fermeture (10) sur la rotule (12) d'un crochet de remorquage (11) pour véhicules automobiles selon l'une quelconque des revendications précédentes, **caractérisé en ce que** le bouton (6) est orientable en rotation sur un point d'appui (29) et comprend une extrémité reposant sur l'élément de verrouillage (4) pour le soulever lorsque le bouton (6) est enfoncé, le libérant de la dent (5).

7. Système de fermeture (10) sur la rotule (12) d'un crochet de remorquage (11) pour véhicules automobiles selon l'une quelconque des revendications précédentes, **caractérisé en ce que** le système de déplacement comprend une bascule (15) actionnée par le levier (3) via un mouvement de bielles (16).

8. Système de fermeture (10) sur la rotule (12) d'un crochet de remorquage (11) pour véhicules automobiles selon la revendication 7, **caractérisé en ce que** la force de fermeture de la genouillère sur les écrous (2A, 2B) est régulée au moyen de une vis (18).
